# EUROPEAN PATENT APPLICATION

(11) **EP 4 575 994 A1**
(43) Date of publication of application: **25.06.2025**
(21) Application number: 23218478.8
(22) Date of filing: 20.12.2023
(51) Int. Cl.: G06T 7/33

(54) **METHOD OF AUTOMATICALLY MATCHING OF A CT DENTAL VOLUME AND A DIGITAL DENTAL IMPRESSION OF A PATIENT USING NEURAL NETWORKS**

(71) Applicant: DENTSPLY SIRONA Inc., York, PA 17401 (US); Sirona Dental Systems GmbH, 64625 Bensheim (DE)
(72) Inventor: Hieber, Simone Elke, 5400 Baden (CH); Elvers, Michael, 64625 Bensheim (DE); Bielser, Daniel, Zürich (CH); Stannigel, Kai, 64625 Bensheim (DE); Eck, Simon, 64625 Bensheim (DE)
(74) Representative: Venner Shipley LLP

(57) **Abstract**

A computer-implemented method relates to overlapping a first and a second digital 3D images of an oral cavity, obtained through optically scanning a surface of the oral cavity and X-ray imaging, MRI, or acoustical imaging, respectively, the method comprising: a first matching step comprising: determining by using neural networks corresponding anatomical structures in the first and second digital 3D images; and creating, respectively, at least one representative point; generating a first transformation mapping the representative points to the corresponding representative points; wherein a subsequent second matching step comprises: determining surface points in first digital 3D image and corresponding edge points in the second digital 3D image using the first transformation; and generating a second transformation to be applied in succession to the first transformation that maps the surface points and corresponding edge points; the method further comprising: overlapping the first and second digital 3D images by applying the first and second transformations successively and displaying the result.

## Description

### TECHNICAL FIELD OF THE INVENTION

The present invention relates to dental imaging systems and computer-implemented methods of overlapping a tomographic dental volume and a digital dental impression of a patient.

### BACKGROUND ART OF THE INVENTION

Dentists generally use a variety of dental images generated with different imaging techniques for the purpose of diagnosis and therapeutic treatment. These dental images usually include computed tomographic volume images, as well as optical intraoral surface scans commonly known as digital dental impressions. The computed tomographic volume images can be acquired through X-ray imaging, magnetic resonance imaging, and recently also through acoustic imaging.

Particularly in implantology, the dentist needs precise information on the surface geometry of the teeth as well as the structure of the jawbone to plan the entire implant procedure including design of the implant and its placement into the jawbone. In general, a computed tomographic volume obtained through X-ray imaging is used by the dentist to view the teeth, the jawbone structure, and assess its quality for the implant procedure. However, the X-ray CT volumes generally provide insufficiently reliable information on the geometry of the tooth surface because the X-ray CT volumes usually have a low resolution, and are affected by image artefacts due to metal parts or beaming hardening or the like. Therefore, the dentist usually uses additionally an optical intraoral surface scan of the teeth and the gingiva. However, the optical intraoral surface scan lacks information about the jawbone. Therefore, for implantology, the dentist needs to be provided with a combined image obtained through overlapping a tomographic dental volume and a digital dental impression of a patient, which shows not only the jawbone but also a sufficiently resolved geometry of the surface of the teeth.

Methods of overlapping a tomographic dental volume and a digital dental impression of a patient are generally known in the prior art.

Reference is made to US8111909B2 which discloses a method of generating a digital dental prosthetic design based on two complementary 3D models with overlapping regions. In a first step, an operator selects three pairs of corresponding points in the matching regions of the 3D models. Subsequently, the sum of the distances of the resulting points is minimized.

This method and its variants are considered as standard procedures in treatment planning requiring the consideration of an optical scan and an X-ray 3D image. An inherent drawback results from the user interactions necessary for choosing the corresponding points in 3D. It does not only imply an effort for users, but also demands sufficient care in the choice of points, particularly if artefacts are present.

Reference is further made to the following prior art documents in which multimodal image matching has been considered.
G. Rodgers, G. R. Sigron, C. Tanner, S. E. Hieber, F. Beckmann, G. Schulz, A. Scherberich, C. Jaquiery, C. Kunz, B. Müller, "Combining high-resolution hard X-ray tomography and histology for stem cell-mediated distraction osteogenesis", Applied Sciences 12(12) (2022) 6268.
M. Buscema, S. E. Hieber, G. Schulz, H. Keyhole, A. Hipp, F. Beckmann, J. A. Lobrinus, T. Saxer, B. Müller, "Ex vivo evaluation of an atherosclerotic human coronary artery via histology and high-resolution hard X-ray tomography", Scientific Reports 9 (2019) 14348.
N. Chicherova, S. E. Hieber, A. Khimchenko, C. Bikis, B. Müller, P. Cattin, "Automatic deformable registration of histological slides to µCT volume data", Journal of Microscopy 271(1) (2018) 49-61.
S. E. Hieber, C. Bikis, A. Khimchenko, G. Schweighauser, J. Hench, N. Chicherova, G. Schulz, B. Müller, "Tomographic brain imaging with nucleolar detail and automatic cell counting", Scientific Reports 6 (2016) 32156.
A. Stalder, B. Ilgenstein, N. Chicherova, H. Deyhle, F. Beckmann, B. Müller, S. E. Hieber, "Combined use of micro computed tomography and histology to evaluate the regenerative capacity of bone grafting materials", International Journal of Materials Research 105 (7) (2014) 679-691.
P. Thalmann, S. E. Hieber, G. Schulz, H. Deyhle, A. Khimchenko, V. Kurtcuoglu, U. Olgac, A. Marmaras, W. Kuo, E. P. Meyer, F. Beckmann, J. Herzen, S. Ehrbar, B. Müller, "Three-dimensional registration of synchrotron radiation-based micro-computed tomography images with advanced laboratory micro-computed tomography data from murine kidney casts", Proceedings of SPIE 9212 (2014) 92120Y.
B. Müller, H. Deyhle, S. Lang, G. Schulz, T. Bormann, F. Fierz, S. E. Hieber, "Three-dimensional registration of tomography data for quantification in biomaterials science", International Journal of Materials Research 103 (2) (2012) 242-249.

### SUMMARY OF THE INVENTION

An objective of the present invention is to provide a computer implemented method and a system which enables overlapping a first digital 3D dental image and a second digital 3D dental image in a geometrically precise manner as well as in a robust manner against image artefacts.

This objective has been achieved by the computer-implemented method as defined in claim 1, and the dental imaging system as defined in claim 6. The subject-matters of the dependent claims define further developments and preferred embodiments.

The computer implemented method of the present invention is for overlapping a first digital 3D image and a second digital 3D image, each showing the oral cavity. The first digital 3D image is obtained through optically scanning a surface of the oral cavity. The second digital 3D image is obtained through X-ray imaging, magnetic resonance imaging, or acoustical imaging of the oral cavity. The method comprises a first matching step, and a second matching step following the first matching step. The first matching step comprises the sub steps of: determining by using neural networks anatomical structures in the first digital 3D image and corresponding anatomical structures in the second digital 3D image; and creating respectively for each anatomical structure and said corresponding anatomical structure at least one representative point; and generating a first transformation that maps the representative points in first digital 3D image to the corresponding representative points in the second 3D digital image. The second matching step comprises the sub steps of: determining surface points in first digital 3D image and corresponding edge points in the second digital 3D image using the first transformation; and generating a second transformation to be applied in succession to the first transformation that maps surface points in first digital 3D image and corresponding edge points in the second digital 3D image. The method further comprises: a step of overlapping the first digital 3D image and a second digital 3D by using the first transformation and the second transformation successively in the given order; and a step of displaying the first digital 3D image and a second digital 3D in the overlapped state.

The present invention overcomes these disadvantages of the prior art by successively applying a two-stage matching procedure, wherein the two matching procedures respectively serve a coarse matching and a fine matching procedure. In the first matching procedure an AI-based determination of reference points to be mapped is achieved. As the reference points represent volumetric anatomical structures instead of raw data points, the overall method turns out be more robust. Furthermore, in the second matching procedure, surface points in first digital 3D image and corresponding edge points in the second digital 3D image are used for the mapping, wherein the edge points are determined using the mapping results of the first matching procedure.

In an embodiment, at least one neural network is trained by data including a plurality of first digital 3D images. The first digital 3D image may comprises tooth annotations representing the tooth sequences including the tooth number and the tooth center. Furthermore, at least one neural network is trained by data including a plurality of second digital 3D images. The second digital 3D images comprise annotations representing the anatomical structures.

In an embodiment, the anatomical structure to be identified in the first digital 3D image and the corresponding anatomical structure to be identified in the second digital image may be a jaw arch, the tooth crown, the tooth pulps, and/or a tooth root.

In an embodiment, the surface points in the first digital 3D image and the corresponding edge points in the second digital image are preferably located in the occlusal, lingual, or buccal surfaces of the teeth.

In an embodiment, an edge detection processing may be used to determine the corresponding edge points in the second digital image.

The present invention disclosure also includes a computer program comprising computer readable codes, which can be executed by a computerized system that carries out the first matching step; the second matching, the overlapping step, and the displaying step of the method. The dental imaging system comprises an acquisition means for acquiring a first digital 3D image, and a second digital 3D image; a computing unit for performing the first matching step; the second matching, the overlapping step; and a display for displaying the first digital 3D image and a second digital 3D in the overlapped state.

### BRIEF DESCRIPTION OF THE DRAWINGS

In the following description, the present invention will be explained in more detail with reference to the exemplary embodiments and with reference to the drawings, wherein
Fig. 1 - shows a dental imaging system having an X-ray device according to an embodiment of the present invention;
Fig. 2a - shows a dental imaging system having an intraoral scanner according to an embodiment of the present invention;
Fig. 2b - shows a dental practitioner optically scanning the dental condition of a patient using the dental imaging system of Fig. 2a;
Fig. 3 - shows a flowchart of the method for overlapping a first digital 3D image and a second digital 3D image according to an embodiment of the present invention;
Fig. 4 - shows a step of determining by using neural networks anatomical structures in the first digital 3D image according to an embodiment of the present invention;
Fig. 5 - shows a graphical illustration of the representative points of the anatomical structures in the first digital 3D image according to an embodiment of the present invention;
Fig. 6 - shows a step of determining by using neural networks corresponding anatomical structures in the second digital 3D image according to an embodiment of the present invention;
Fig. 7 - shows step of generating a first transformation that maps the representative points in first digital 3D image to the corresponding representative points in the second 3D digital image;
Fig. 8 - shows a step of determining surface points in first digital 3D image according to an embodiment of the present invention;
Fig. 9 - shows a step of determining corresponding edge points in the second digital 3D image using the first transformation and the surface points of Fig. 8;
Fig. 10 - shows a display of the first digital 3D image and a second digital 3D in the overlapped state by using the first transformation and the second transformation successively in the given order;
Fig. 11 - shows a training of the neural networks used in Fig. 4 according to an embodiment of the present invention;
Fig. 12 - shows a training of the neural networks used in Fig. 6 according to an embodiment of the present invention;
Fig. 13 - shows a schematic representation of a tooth and its pulp with a position at the geometric center according to an embodiment of the present invention.

The reference numbers shown in the drawings designate the elements listed below, which are referred to in the following description of the exemplary embodiments.
1. Dental imaging system
2. X-ray device
3. X-ray source
4. X-ray detector
5. User interface (Control panel)
6. Head fixture
7. Bite block
8. Computer
9. Display
10. Mouse
11. Keyboard
12. Intraoral Optical Scanner
13. First digital 3D image (e.g., Digital Impression)
14. Second digital 3D image (e.g, CBCT Volume)
15. Anatomical structure (15)
16. Corresponding anatomical structure (16)

P: Representative point for an anatomical structure (15)
P': Representative point for an anatomical structure (16)
S: Surface points in first digital 3D image (13)
E: Edge point in the second digital 3D image (14)
NN: Neural networks

### DETAILED DESCRIPTION OF THE EMBODIMENTS

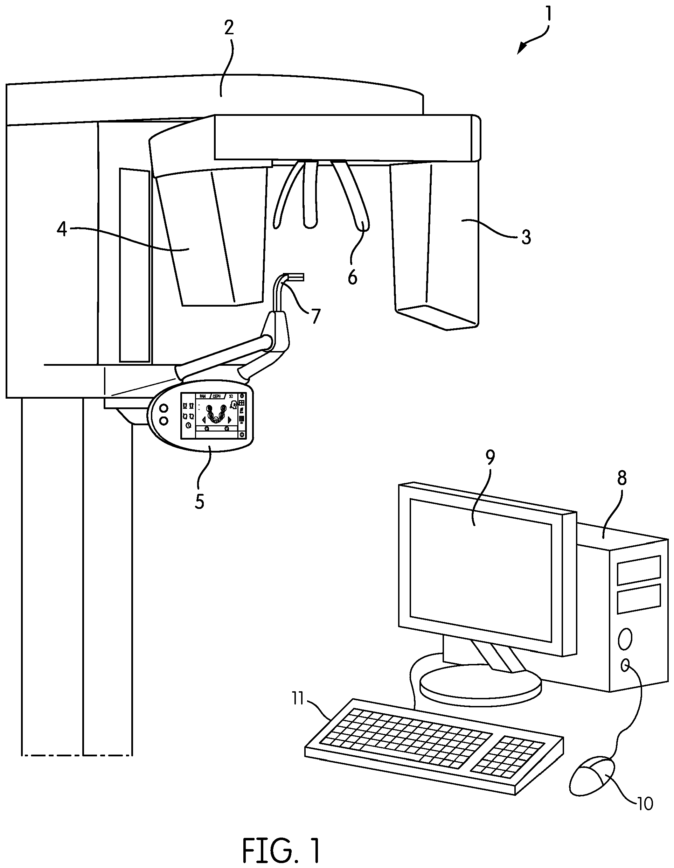

The method according to the invention, which is explained in detail below, is a computer-implemented method and can be carried out on a computerized dental imaging system (1) as shown in an embodiment in Fig. 1.

The present invention also includes a corresponding computer program having computer-readable code for implementing the method. The computer program is provided on a computer readable storage medium accessible to the dental imaging system (1).

### The dental imaging system

The presented computerized dental imaging system (1) comprises an x-ray device (2) for performing patient imaging, which generates x-ray projection images or a sinogram. The x-ray device (2) has an x-ray source (3) and an x-ray detector (4) that are rotated around the patient's head during the imaging. The trajectory of the x-ray source (3) and the x-ray detector (4) during the imaging can describe a circular path. However, it can also assume a form deviating from this. If several actuators (not shown) are controlled simultaneously, a trajectory deviating from a pure circular path around the patient's head can be achieved. The patient's head is positioned in the x-ray device (2) with a bite block (7) and optionally with a head fixation (6). The trajectory (*course*) of the x-ray source (3) and the x-ray detector (4) with respect to the bite block (7) and the head fixation (6) are known by the system. The x-ray detector (4) detects the x-rays emitted by the x-ray source (3) during the rotation. The x-ray projection images are acquired, namely read out from the x-ray detector (4). The computerized dental imaging system (1) also comprises an operating unit (5) such as a user interface, a computing unit (8) e.g., a computer which can be connected to the x-ray device (2), and a display device (9) such as a screen for visualizing any data sets resulting from the method. The computer may be connected to the x-ray device (2) via a local area network (not shown) or, alternatively, via the Internet. The computer is connected to an input device such as a keyboard (11), mouse (10), and the like. The computer may be also part of a cloud. Alternatively, the computer may be integrated into the x-ray device (2). Alternatively, all or some of the computations may take place in the cloud as cloud computing. The computer executes the computer program and provides the data sets, e.g., the panoramic images for visualization on the screen. The screen may be provided spatially separate from or integrated with the x-ray device. Preferably, the computer may also control all functions of the x-ray device (2). Alternatively, separate computers may be used for the control, operation, and panoramic image reconstruction.

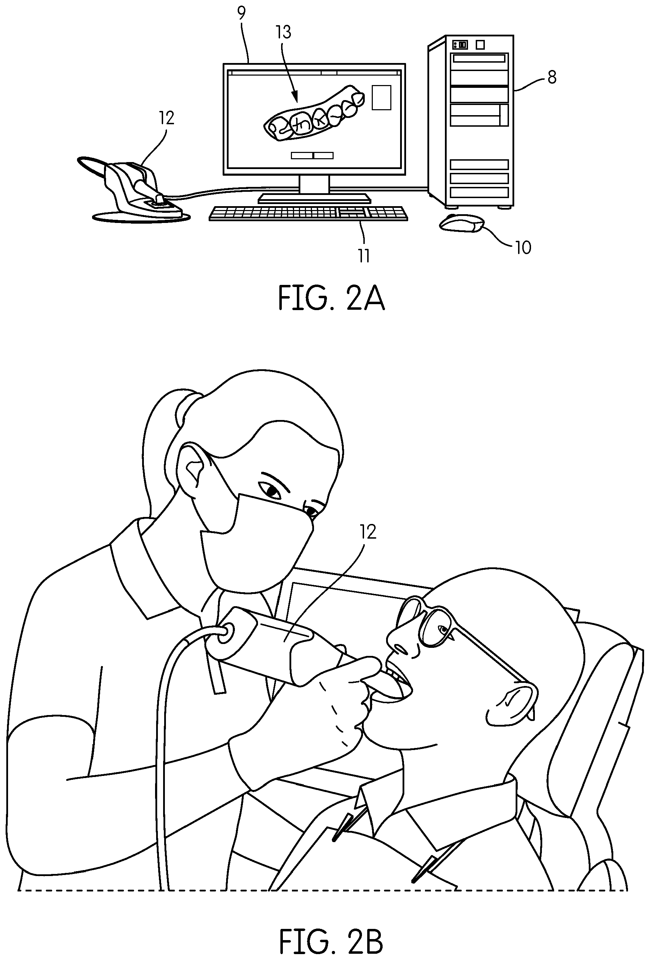

The dental imaging system (1) is preferably configurable as an IoT system and can be bidirectionally connected via a local area network and/or the internet (not shown) to other dental devices such as optical intraoral scanners (12)) as shown in Fig. 2A, dental milling machines, additive manufacturing machines, and the like for cloud computing, data exchange, remote control, and the like.

### The method of overlapping

The computer-implemented method is for overlapping a first digital 3D image (13) and a second digital 3D image (14) each showing the oral cavity. The dental imaging system (1) comprises an acquisition means for acquiring the first digital 3D image, and the second digital 3D image. The first digital 3D image (13) is obtained through optically scanning a surface of the oral cavity as shown in Fig. 2B. The second digital 3D image (14) is obtained through a dental imaging system having an x-ray device (2) as shown in Fig. 1. Alternatively, magnetic resonance imaging, or acoustical imaging of the oral cavity can be used.

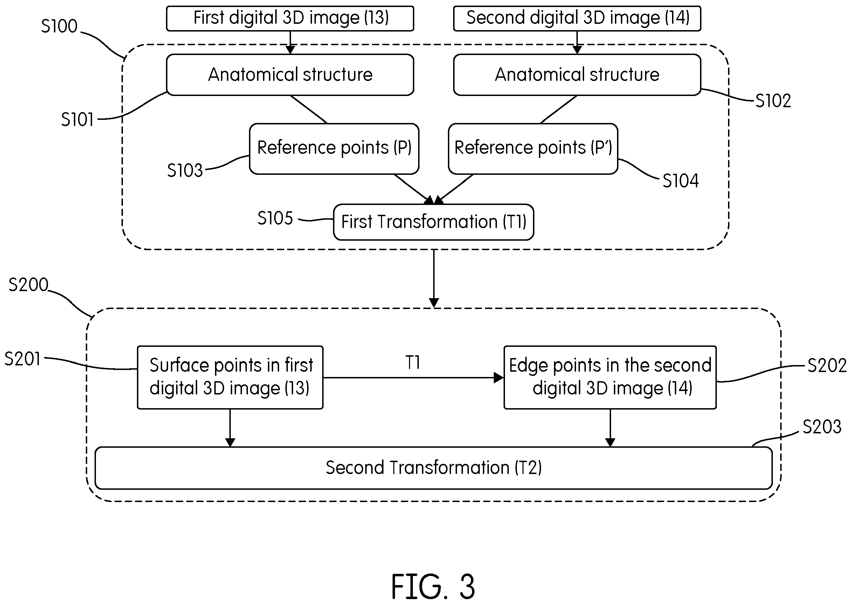

As shown in Fig. 3, the method has a first matching step (S100), and a second matching step (S200) following the first matching step (S100).

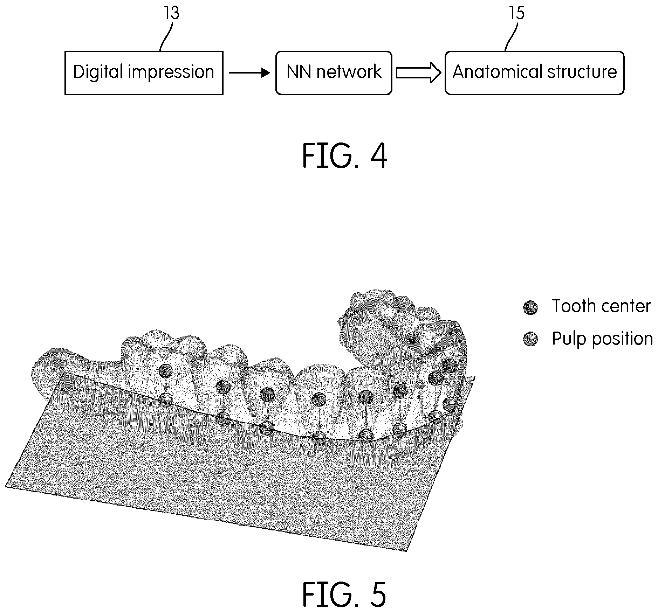

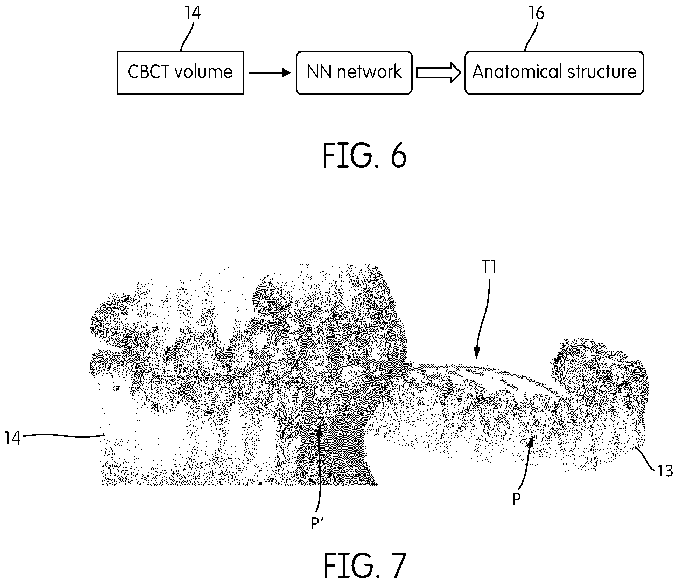

The first matching step (S100) comprises the following sub steps of:
In sub steps (S101; S102), a plurality of anatomical structures (15) in the first digital 3D image (13) and corresponding anatomical structure (16) in the second digital 3D image (14) are determined by using neural networks (NN;NN') as shown in Fig. 4 and Fig. 6. These neural networks (NN;NN') will be later explained in more detail. In sub steps (S103; S104), respectively for each anatomical structure (15) and said corresponding anatomical structure (16) at least one representative point (P; P') is newly created as shown in Fig. 5 and Fig. 7. That means the representative point (P; P') do not essentially correspond to the initially acquired data points of the first/second digital 3D image images (13; 14), but are newly created.

As the representative points are not physically placed on the tooth surface or gingiva to avoid the effect of related artefacts, they are generally not visible in the first digital image and thus cannot be annotated directly. Thus, representative points are derived after the application of the trained neural network. Fig. 5 illustrates the procedure in the case of pulp positions. The surface of the teeth extracted from the first digital image are used to determine tooth centers. Subsequently the tooth centers are projected in opposite occlusal direction on the plane at the border between teeth and gingiva.

In sub step (S105) a first transformation (T1) that maps the representative points (P) in first digital 3D image (13) to the corresponding representative points (P') in the second 3D digital image (14) is generated as shown in Fig. 7. The transformation may have a matrix representation, which comprises translation, rotation, scaling and/or morphing. The transformation is derived using the classic algorithm of rigid Procrustes superimposition applied to the representative point pairs (P,P'), alternatively other methods such as weighted least-squares can be used.

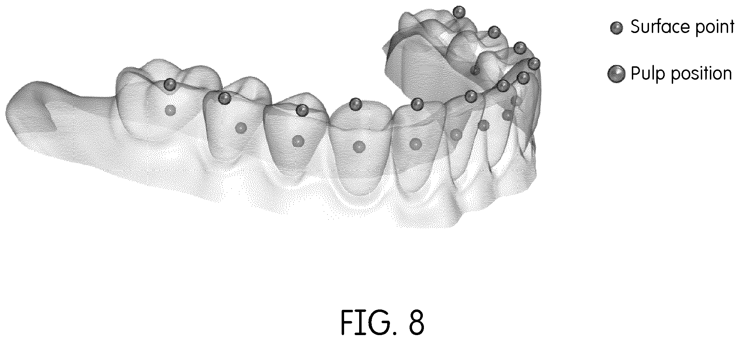

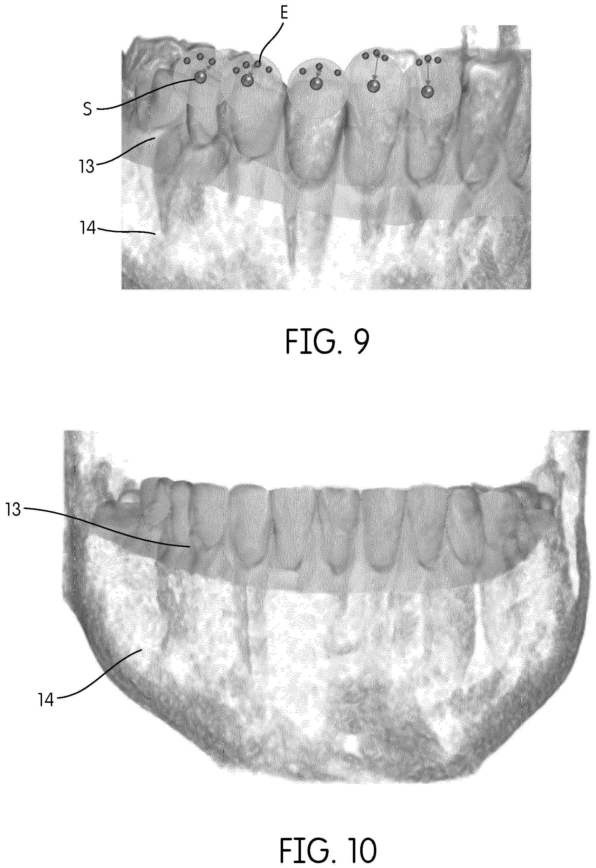

The second matching step (S200) comprises the following sub steps of:
In a sub steps (S201) a plurality of surface points (S) in the first digital 3D image (13) are determined by choosing a surface point for each anatomical structure and maximizing its distance to the gingiva as shown in Fig. 8. And in a sub steps (S202) corresponding edge points (E) in the second digital 3D image (14) are determined using the first transformation (T1) as shown in Fig. 9. In the sub steps (S202) the said corresponding edge points are determined in the second digital image (14) using an edge detection processing and selected a close edge point with the highest similarity in the local surface normal and the gray value gradient. The surface points (S) in first digital 3D image (13) and corresponding edge points (E) in the second digital 3D image (14), are located in the occlusal, lingual, or buccal surfaces of the teeth. In sub step (S203), a second transformation (T2) to be applied in succession to the first transformation (T1) that maps surface points (S) in first digital 3D image and corresponding edge points (E) in the second digital 3D image is generated. The second transformation is determined using the iterative closest point procedure (ICP) applied to the point pairs (S, E). This procedure is an established approach to minimize the distance of two point clouds iteratively. ICP is known to those skilled in the art and further details are omitted for avoiding unnecessary prolonging the description.

In an overlapping step, as shown in Fig. 10, the first digital 3D image (13) and the second digital 3D (14) are overlapped by using the first transformation (T1) and the second transformation (T2) successively in the given order.

In a displaying step, the first digital 3D image and a second digital 3D image are displayed, e.g., on a screen in the overlapped state.

After the application of the second transformation, an optional quality measure can be used for evaluating the degree of the overlap. The quality measure is based on the similarity level of the point pairs representing the anatomical structure (P, P') and the surface-edge point pairs (S, E) after mapping. If the calculated quality measure is lower than a threshold, the procedure can be adapted by varying the algorithm parameter in the procedure, such as the choice of the anatomical structures or the size of the neighborhood to search for corresponding edge points. If the size of the neighborhood is increased, more potential counterpart points can be considered at the expense of higher computation cost. Alternatively, the user modify the representative points or follow the three-pair-point procedure as mentioned above.

The above described method is further provided as computer readable codes, which when executed by the computerized dental imaging system (1), causes the said system to carry out the first matching step; the second matching, the overlapping step, and the displaying step. The computing unit is adapted to perform the first matching step; the second matching, the overlapping step. The display is adapted to display the first digital 3D image and a second digital 3D in the overlapped state.

### Training of the neural networks

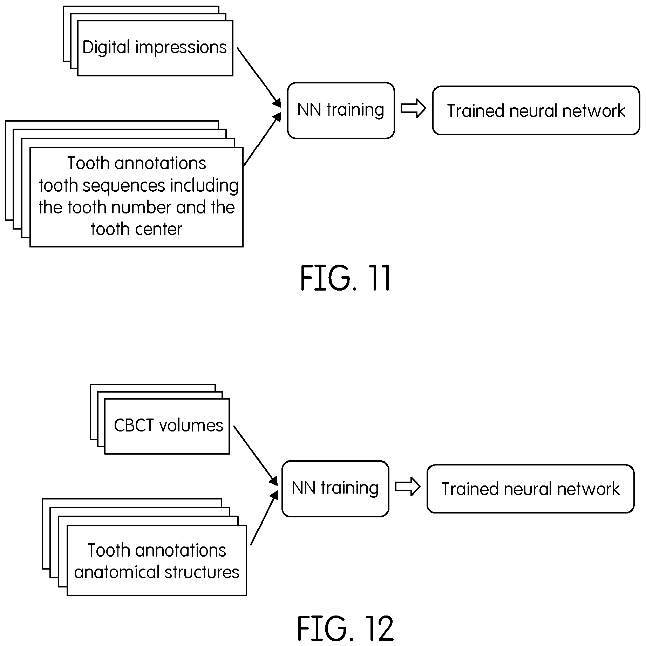

The training is illustrated in Figs 11 and 12.

At least one neural network is trained by data including a plurality of first digital 3D images, comprising annotations representing the tooth sequences including the tooth number and the tooth center.

At least one neural network is trained by data including a plurality of second digital 3D images, comprising annotations representing the anatomical structures.

Annotating the digital image can be conducted manually and/or assisted by automatic image processing tools. The teeth numbers range from 11 to 48 following the international tooth numbering system (FDI).

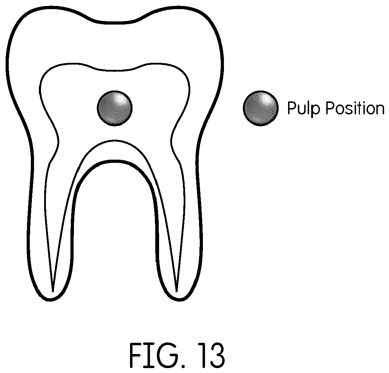

Tooth centers are expected to be located in the middle of the visible part of the tooth, i.e. tooth crown. Pulp positions represent the geometric center of the main pulp body (see Fig. 13).

### The anatomical structures

The anatomical structure in first digital 3D image (13) and corresponding anatomical structures in the second digital image (14), are one of the jaw arches, the tooth crown, the tooth pulps, the tooth roots.

In the present description all x-ray images serve for the purpose of illustration. These might also be replaced by images obtained through magnetic resonance imaging techniques or other volumetric imaging modalities using acoustical techniques or the like. The second digital 3D images may also include MRI Data.

## Claims

**1.** A computer implemented method of overlapping a first digital 3D image (13) and a second digital 3D image (14) each showing the oral cavity,
wherein the first digital 3D image (13) is obtained through optically scanning a surface of the oral cavity,
wherein the second digital 3D image (14) is obtained through X-ray imaging, magnetic resonance imaging, or acoustical imaging of the oral cavity,
the method comprising:
a first matching step (S100), and a second matching step (S200) following the first matching step (S100);
wherein the first matching step (S100) comprises the sub steps of:
determining (S101; S102) by using neural networks (NN;NN') anatomical structures (15) in the first digital 3D image (13) and corresponding anatomical structures (16) in the second digital 3D image (14); and
creating (S103; S104) respectively for each anatomical structure (15) and said corresponding anatomical structure (16) at least one representative point (P; P');
generating (S105) a first transformation (T1) that maps the representative points (P) in first digital 3D image (13) to the corresponding representative points (P') in the second 3D digital image (14);
wherein the second matching step (S200) comprises the sub steps of:
determining (S201; S202) surface points (S) in first digital 3D image (13) and corresponding edge points (E) in the second digital 3D image (14) using the first transformation (T1); and
generating (S203) a second transformation (T2) to be applied in succession to the first transformation (T1) that maps the surface points (S) in first digital 3D image and corresponding edge points (E) in the second digital 3D image; and
the method further comprising:
a step of overlapping the first digital 3D image and a second digital 3D by using the first transformation (T1) and the second transformation (T2) successively in the given order;
a step of displaying the first digital 3D image and a second digital 3D in the overlapped state.

**2.** The computer implemented method according to any one of the preceding claims, **characterized in that**
at least one neural network is trained by data including a plurality of second digital 3D images, comprising annotations representing the anatomical structures; and
at least one neural network is trained by data including a plurality of first digital 3D images, comprising tooth annotations representing the tooth sequences including the tooth number and the tooth center.

**3.** The computer-implemented method according to claim 1 or 2, **characterized in that** the anatomical structure in first digital 3D image and corresponding anatomical structures in the second digital image, are one of the jaw arches, the tooth crown, the tooth pulps, the tooth roots.

**4.** The computer-implemented method according to any one of the preceding claims, **characterized in that** surface points in first digital 3D image and corresponding edge points in the second digital image, are located in the occlusal, lingual, or buccal surfaces of the teeth.

**5.** The computer-implemented method according to any one of the preceding claims, **characterized in that** in the step of determining the said corresponding edge points in the second digital image an edge detection processing is used.

**6.** A computer program comprising computer readable codes, which when executed by a computerized system, causes the said system to carry out the first matching step; the second matching, overlapping step, and the displaying step of the method according to any one of the previous method claims.

**5.** A dental imaging system comprising:
an acquisition means for acquiring a first digital 3D image, and a second digital 3D image;
a computing unit which is adapted to perform the first matching step; the second matching, the overlapping step; and
a display for displaying the first digital 3D image and a second digital 3D in the overlapped state.
